# FASCICULE DE BREVET EUROPEEN

(11) **EP 0 932 581 B1**
(45) Date de publication et mention de la délivrance du brevet: **02.04.2003**
(21) Numéro de dépôt: 98937616.5
(22) Date de dépôt: 10.07.1998
(51) Int. Cl.: C01B 39/22

(54) **PROCEDE POUR L'OBTENTION DE CORPS GRANULAIRES EN ZEOLITE LSX A FAIBLE TAUX DE LIANT INERTE**
VERFAHREN ZUR HERSTELLUNG GRANULIERTER KÖRPER AUS ZEOLITH LSX MIT EINEM GERINGEN INERTEN BINDEMITTEGEHALT
METHOD FOR OBTAINING LSX ZEOLITE GRANULAR AGGLOMERATES WITH LOW INERT BINDING MATERIAL RATIO

(30) Priorité: 22.07.1997 FR 9709283
(43) Date de publication de la demande: 04.08.1999
(73) Titulaire: CECA S.A., 92800 Puteaux (FR)
(72) Inventeur: PLEE, Dominique, F-64140 Lons (FR)
(74) Mandataire: Treuil, Claude
(86) Numéro de dépôt international: FR9801508
(87) Numéro de publication internationale: WO99005063

(56) Documents cités:
- EP-A- 0 196 043
- DE-A- 2 446 974
- DATABASE WPI Section Ch, Week 9235 Derwent Publications Ltd., London, GB; Class E33, AN 92-288774 XP002062624 & JP 04 198011 A (TOSOH CORP) , 17 juillet 1992
- DATABASE WPI Section Ch, Week 9431 Derwent Publications Ltd., London, GB; Class J01, AN 94-252505 XP002062622 & JP 06 183725 A (TOSOH CORP) , 5 juillet 1994
- DATABASE WPI Section Ch, Week 9239 Derwent Publications Ltd., London, GB; Class E36, AN 92-316846 XP002062621 & DD 299 635 A (CHEM BITTERFELD-WOLFEN AG) , 30 avril 1992
- DATABASE WPI Section Ch, Week 9330 Derwent Publications Ltd., London, GB; Class A97, AN 93-239799 XP002062623 & JP 05 163015 A (TOSOH CORP) , 29 juin 1993

## Description

### DOMAINE TECHNIQUE

La présente invention est relative l'obtention d'agglomérés de faujasites à faible rapport silicium / aluminium et à faible teneur en liant inerte.

### TECHNIQUE ANTERIEURE

La synthèse de la plupart des zéolites s'effectue principalement par nucléation et cristallisation de gels de silicoaluminates, dont le résultat est une zéolite en très petits cristaux. On parle à ce sujet de poudres. Mais ces poudres sont d'un emploi industriel malaisé et l'on préfère une forme agglomérée granulaire. Ces agglomérés, qu'ils soient sous forme de plaquettes, de billes ou d'extrudés, sont couramment constitués d'une poudre de zéolite, qui constitue l'élément actif et d'un liant destiné à assurer la cohésion des cristaux sous forme de grains. Ce liant n'a aucune propriété adsorbante, sa fonction étant de conférer au grain une résistance mécanique suffisante pour résister aux vibrations et aux mouvements auquel il est soumis au cours de ses divers emplois. On réalise ces granulés par empâtage de la poudre de zéolite avec une pâte argileuse, dans des proportions de l'ordre de 80 % de poudre pour 20 % de liant, puis mise en forme en billes, plaquettes ou extrudés, et traitement thermique à haute température pour cuisson de l'argile et réactivation de la zéolite.

Le résultat en est des corps zéolitiques dont la granulométrie est de quelques millimètres, et qui, si le choix du liant et la granulation sont faits dans les règles de l'art, présentent un ensemble de propriétés satisfaisantes, en particulier de porosité, de résistance mécanique, de résistance à l'abrasion. Les propriétés applicatives sont évidemment réduites dans le rapport de la poudre active à la poudre et son liant inerte d'agglomération.

Divers moyens ont été proposés pour pallier cet inconvénient du liant d'être inerte quant aux performances adsorbantes, parmi lesquels, la transformation du liant, pour tout ou partie, en zéolite. Cette opération s'effectue facilement lorsqu'on utilise des liants de la famille de la kaolinite, préalablement calcinés à des températures comprises entre 500°C et 700°C. Une variante consiste à mouler des grains de kaolin et à les zéolitiser : son principe est exposé dans "ZEOLITE MOLECULAR SIEVES" de D.W. BRECK, John Wiley and Sons, NEW YORK. Cette technologie a été appliquée avec succès à l'obtention de grains de zéolite A ou X, constitués jusqu'à 95 % en poids de la zéolite elle-même et d'un résiduel de liant non transformé (voir à cet effet HOWELL, US 3,119,660). L'ajout d'une source de silice étant recommandé lorsque l'on veut obtenir une zéolite X ("ZEOLITE MOLECULAR SIEVES", BRECK, p. 320).

KUZNICKI et collaborateurs montrent dans US 4,603,040 que l'on peut transformer un aggloméré de kaolin en zéolite X de rapport Si/Al égal à 1 ; néanmoins, la réaction pour être pratiquement complète, c'est-à-dire pour aboutir à la formation d'un grain constitué par environ 95 % de zéolite X, requiert environ 10 jours à 50°C, ce qui rend l'opération industriellement irréalisable. Si la réaction est menée en combinant une période de mûrissement de 5 jours à 40°C, suivie d'une cristallisation à plus haute température, le solide résultant est constitué de 80 % de faujasite et de 15 % de zéolite A.

JP-05163015 (Tosoh Corp.) enseigne que l'on peut former des grains de zéolite X à rapport Si/Al faible, de l'ordre de 1 en mélangeant une poudre de zéolite X de rapport Si/Al = 1, avec du kaolin, de la potasse, de la soude et de la carboxyméthylcellulose. On met en forme par extrusion. Les grains ainsi obtenus sont séchés, calcinés à 600°C pendant 2 heures puis immergés dans une solution de soude et de potasse à 40°C pendant 2 jours.

Ces deux documents enseignent que l'on peut préparer des solides résistants mécaniquement, constitués pour partie majoritaire de zéolite X dont le rapport Si/Al est sensiblement inférieur à celui des zéolites X classiquement fabriquées par la voie gel dont le rapport Si/Al est compris entre 1,1 environ et 1,5. Néanmoins, les procédés associés sont lourds et pèchent, soit par la durée excessive de réaction, soit par le nombre d'étapes mises en jeu. On peut craindre, d'autre part, que le traitement thermique tel que revendiqué dans JP 05-163015, après l'étape de mise en forme, ne contribue à l'amorphisation du grain et que la digestion caustique qui suit ait pour objet de la recristalliser, ce qui expliquerait la lenteur du procédé.

### EXPOSE DE L'INVENTION

Dans la présente demande, on réservera la dénomination LSX (mise pour Low Silica X) au pôle des zéolites X à faible rapport Si/Al, à savoir les zéolites X à rapport Si/Al = 1, en acceptant des écarts expérimentaux raisonnables autour de cette valeur unitaire, les valeurs inférieures correspondant très certainement à des imprécisions de la mesure, et les valeurs supérieures à la présence d'inévitables impuretés à plus forte teneur en silice et contenant des ions sodium et éventuellement des ions potassium. On montre ici que l'on peut préparer des corps zéolitiques constitués d'au moins 95 % de zéolite ayant un rapport Si/Al égal à 1, grâce à la mise en oeuvre d'un procédé beaucoup plus simple et plus rapide qui consiste en :
- a) l'agglomération une poudre de zéolite LSX avec un liant argileux contenant au moins 80 % d'une argile zéolitisable,
- b) la mise en forme du mélange obtenu sous a),
- c) son séchage, puis sa calcination à une température de 500 à 700°C, de préférence de 500 à 600°C,
- d) la mise en contact du produit solide résultant de c) avec une solution aqueuse caustique,
- e) le lavage, le séchage et l'activation à une température de 300 à 600, de préférence de 500 à 600°C.

La zéolitisation du liant se produit au cours de l'étape d), par action de la solution caustique qui doit être au moins 0,5 molaire, et qui peut être une solution de soude et de potasse dans laquelle la potasse est présente à une teneur maximum de 30% molaire (par rapport à l'ensemble soude + potasse). Il peut être avantageux d'utiliser une solution de soude. On procède à une température suffisante pour obtenir une vitesse de zéolitisation raisonnable.

L'argile zéolitisable appartient à la famille de la kaolinite, de l'halloysite, de la nacrite ou de la dickite. On utilise très simplement le kaolin.

Les exemples suivants illustrent l'invention.

### EXEMPLE 1 : Préparation d'une faujasite LSX en présence de potasse

On synthétise une zéolite de type faujasite LSX, de rapport Si/Al = 1, en mélangeant les solutions suivantes :

### Solution A :

On dissout 136 grammes de soude, 73 grammes de potasse (exprimée en pur) dans 280 grammes d'eau. On porte à ébullition entre 100-115°C, puis l'on dissout 78 grammes d'alumine. Une fois la dissolution effectuée, on laisse refroidir et on complète avec de l'eau jusqu'à 570 grammes pour tenir compte de l'eau évaporée.

### Solution B:

On mélange 300 grammes d'eau et 235,3 grammes de silicate de soude (25,5 % en SiO₂ ; 7,75 % en Na₂O) sous légère agitation. On ajoute la solution de silicate dans la solution d'aluminate en environ 2 minutes sous forte agitation au moyen d'une turbine défloculeuse de type RAYNERI tournant à 2500 tours / minute (vitesse périphérique = 3,7 m/s), puis on abandonne le gel formé à 60°C pendant 24 heures sans agitation. Après ce laps de temps, on observe une décantation importante, caractéristique du processus de cristallisation. On opère alors une filtration puis un lavage avec environ 15 ml d'eau par gramme de solide. Celui-ci est ensuite mis à sécher à 80°C en étuve. La composition du gel de synthèse est :
4 Na₂O, 1,3 K₂O, 1 Al₂O₃, 2 SiO₂, 91 H₂O

L'analyse chimique du solide résultant de la synthèse fournit une composition :
0,77 Na₂O, 0,23 K₂O, 2 SiO₂, 1 Al₂O₃

L'analyse par diffraction par rayons X confirme que la poudre formée est constituée de faujasite pratiquement pure, accompagnée de traces de zéolite A dont la teneur est estimée à moins de 2 %. Une mesure de capacité d'adsorption de toluène est effectuée, après calcination à 550°C pendant 2 heures, sous atmosphère inerte : on trouve une capacité adsorbée de 22,5 % à 25°C et sous une pression partielle de 0,5.

### EXEMPLE 2 : préparation d'une LSX agglomérée

Une partie de la poudre est mise en forme en mélangeant 42,5 grammes (exprimés en équivalent calciné), 7,5 grammes d'une argile fibreuse (exprimés en équivalent calciné), 1 gramme de carboxyméthylcellulose et l'eau adéquate pour pouvoir procéder à une extrusion sous forme d'extrudés de 1,6 mm de diamètre et d'environ 4 mm de long. Les extrudés sont mis à sécher à 80°C et sont ensuite calcinés à 550°C pendant 2 heures sous atmosphère inerte.

### EXEMPLE 3 : Préparation d'une LSX agglomérée à faible taux de liant inerte selon l'invention

On utilise la poudre de zéolite LSX de l'exemple 1 en l'agglomérant, avec un mélange d'une argile de type montmorillonite (15 %), d'une argile de type kaolin (85 %), d'un peu de carboxyméthylcellulose et d'eau. L'extrusion achevée, on effectue un séchage à 80°C et une caicination à 600°C pendant 2 heures, sous atmosphère inerte exempte de vapeur d'eau.

On prépare une solution contenant 16,7 grammes de soude en pastilles, 7,7 grammes de potasse (exprimés en pur), dans 100 ml d'eau. On immerge 10 grammes de grains de zéolite fraîchement calcinés dans 17 ml de cette solution et l'ensemble est porté à 95°C, sans agitation.

Des prélèvements de solide sont effectués après 3, 6 et 24 heures, afin de suivre l'évolution de la cristallinité en fonction du temps. Chacun de ces prélèvements est lavé par immersion dans de l'eau à raison de 20 ml/g ; 4 lavages sont réalisés.

On effectue les mesures de capacité d'adsorption de toluène dans les conditions précédemment décrites et l'on trouve les valeurs suivantes :

| | |
|---|---|
| LSX agglomérée | |
| (non traitée NaOH + KOH) | 18,2 % |
| LSX agglomérée | |
| (traitée NaOH + KOH, 3h de réaction) | 21,7 % |
| LSX agglomérée | |
| (traitée NaOH + KOH, 6 h de réaction) | 21,6 % |
| LSX agglomérée | |
| (traitée NaOH + KOH, 24 h de réaction) | 21,6 % |

Les diagrammes de rayons X montrent essentiellement la présence de faujasite, avec quelques traces de zéolite A en quantité semblable à ce qui était mesuré sur la poudre avant agglomération. L'analyse chimique conduit à un rapport Si/Al global de 1,04, correspondant à l'objectif recherché. Le rapport Si/Al mesuré par R.M.N. du silicium est égal à 1,01 et correspond au rapport du réseau cristallin.

On démontre ainsi que l'on peut obtenir des grains de LSX dont la teneur en zéolite de type faujasite est au moins de 95 %, sur la base des capacités d'adsorption. On démontre par la même occasion que la réaction peut être rapide (moins de 3 heures), qu'elle n'exige pas de période de mûrissement, et qu'elle ne nécessite pas d'agent porogène en grande quantité, comme revendiqué dans US 4,603,040.

### EXEMPLE 4 : Préparation d'une LSX agglomérée à faible taux de liant inerte selon l'invention

On utilise la poudre de zéolite LSX de l'exemple 1 en l'agglomérant, avec un mélange d'une argile de type montmorillonite (15 %), d'une argile de type kaolin (85 %), d'un peu de carboxyméthylcellulose et d'eau. L'extrusion achevée, on effectue un séchage à 80°C et une calcination à 600°C pendant 2 heures, sous atmosphère inerte exempte de vapeur d'eau.

On immerge 10 grammes de ces agglomérés dans 17 ml d'une solution de soude à 220 g/l pendant 3 heures à 95°C Les agglomérés sont ensuite successivement quatre fois lavés par immersion dans de l'eau à raison de 20 ml/g.

On effectue les mesures de capacité d'adsorption de toluène dans les conditions précédemment décrites et l'on trouve les valeurs suivantes :

| | |
|---|---|
| LSX agglomérée | |
| (non traitée) | 18,2 % |
| LSX agglomérée | |
| (traitée NaOH) | 22,4 % |

On rapproche cette dernière valeur à celle de la LSX agglomérée de l'exemple 3

| | |
|---|---|
| LSX agglomérée | |
| (traitée NaOH/KOH) | 21,7 % |

Il s'agit là de résultats qui traduisent la bonne efficacité des corps zéolitiques selon l'invention, et qui reflètent aussi une meilleure cristallinité de la LSX obtenue par zéolitisation à la soude. Le spectre R.M.N. du silicium montre que le rapport Si/Al est égal à 1,01 dans le réseau cristallin. Ces corps zéolitiques avec une capacité d'adsorption de toluène supérieure à 21,5% à 25°C sont également des objets de l'invention.

## Revendications

1. Procédé pour l'obtention de corps zéolitiques constitués d'au moins 95% de zéolite LSX, comprenant les opérations suivantes :
- a) agglomération d'une poudre de zéolite LSX avec un liant argileux contenant au moins 80 % d'une argile zéolitisable,
- b) mise en forme du mélange obtenu sous a),
- c) séchage, puis calcination à une température de 500°C à 700°C, de préférence de 500 à 600°C
- d) mise en contact du produit solide résultant de c) avec une solution aqueuse caustique au moins 0,5 molaire,
- e) lavage, séchage et activation à une température de 300 à 600°C, de préférence de 500 à 600°C.

2. Procédé selon la revendication 1, dans laquelle la solution caustique est une solution de soude et de potasse dans laquelle la potasse est présente à une teneur maximum de 30% molaire (par rapport à l'ensemble soude + potasse)

3. Procédé selon la revendication 1, dans laquelle la solution caustique est une solution de soude.

4. Procédé selon la revendication 1, **caractérisé en ce que** le liant zéolitisable appartient à la famille de la kaolinite, de l'halloysite, de la nacrite ou de la dickite.

5. Procédé selon la revendication 1, **caractérisé en ce que** le liant zéolitisable est le kaolin.

6. Des corps zéolitiques constitués d'au moins 95% de zéolite LSX, tels qu'on les obtient selon le processus de la revendication 1, avec une capacité d'adsorption de toluène au moins égale à 21,5 %.

## Claims

1. Process for obtaining zeolitic bodies consisting of at least 95% zeolite LSX, comprising the following operations:
- a) agglomeration of a zeolite LSX powder with a clay binder containing at least 80% of a clay able to undergo zeolitization;
- b) forming of the mixture obtained in a);
- c) drying, then calcining at a temperature of 500ºC to 700ºC, preferably 500 to 600ºC;
- d) contacting of the solid product resulting from c) with an at least 0.5 molar aqueous caustic solution; and
- e) washing, drying and activation at a temperature of 300 to 600ºC, preferably 500 to 600ºC.

2. Process according to Claim 1, in which the caustic solution is a sodium hydroxide/potassium hydroxide solution in which the potassium hydroxide is present in a maximum amount of 30 mol% (with respect to the sodium hydroxide + potassium hydroxide combination).

3. Process according to Claim 1, in which the caustic solution is a sodium hydroxide solution.

4. Process according to Claim 1, **characterized in that** the binder able to undergo zeolitization belongs to the kaolinite family, the halloysite family, the nacrite family or the dickite family.

5. Process according to Claim 1, **characterized in that** the binder able to undergo zeolitization is kaolin.

6. Zeolitic bodies consisting of at least 95% zeolite LSX, such as those obtained by the process of Claim 1, with a toluene adsorptivity of at least 21.5%.

## Patentansprüche

1. Verfahren zur Herstellung von Zeolithkörpern, die zu mindestens 95 % aus Zeolith LSX bestehen, das die folgenden Schritte umfaßt:
a) Agglomerieren eines Pulvers aus Zeolith LSX mit einem Bindemittel auf Tonbasis, das mindestens 80 % eines in einen Zeolith überführbaren Tons enthält,
b) formgebende Behandlung des in Schritt a) erhaltenen Gemischs,
c) Trocknen, dann Calcinieren bei einer Temperatur von 500 bis 700 °C, vorzugsweise 500 bis 600 °C,
d) Inkontaktbringen des in Schritt c) entstandenen festen Produkts mit einer mindestens 0,5-molaren wäßrigen kaustischen Lösung,
e) Waschen, Trocknen und Aktivieren bei einer Temperatur von 300 bis 600 °C, vorzugsweise 500 bis 600 °C.

2. Verfahren nach Anspruch 1, wobei die kaustische Lösung eine Lösung von Natriumhydroxid und Kaliumhydroxid ist, in der das Kaliumhydroxid in einem maximalen Anteil von 30 Mol-% (bezogen auf die Summe aus Natriumhydroxid + Kaliumhydroxid) enthalten ist.

3. Verfahren nach Anspruch 1, wobei die kaustische Lösung eine Natriumhydroxid-Lösung ist.

4. Verfahren nach Anspruch 1, wobei das in einen Zeolith überführbare Bindemittel zur Familie von Kaolinit, Halloysit, Nakrit oder Dickit gehört.

5. Verfahren nach Anspruch 1, **dadurch gekennzeichnet, daß** es sich bei dem in einen Zeolith überführbaren Bindemittel um Kaolin handelt.

6. Zeolithkörper, die zu mindestens 95 % aus Zeolith LSX bestehen, die nach dem Verfahren nach Anspruch 1 herstellbar sind, mit einem Adsorptionsvermögen für Toluol von mindestens 21,5 %.
